# EUROPÄISCHE PATENTSCHRIFT

(11) **EP 2 551 645 B1**
(45) Veröffentlichungstag und Bekanntmachung des Hinweises auf die Patenterteilung: **14.06.2017**
(21) Anmeldenummer: 12165440.4
(22) Anmeldetag: 25.04.2012
(51) Int. Cl.: G01D 5/244

(54) **Vorrichtung und Verfahren zur Winkelmessung**
Method and device for measuring angles
Dispositif et procédé destinés à la mesure d'un angle

(30) Priorität: 28.07.2011 DE 102011079961
(43) Veröffentlichungstag der Anmeldung: 30.01.2013
(73) Patentinhaber: Dr. Johannes Heidenhain GmbH, 83301 Traunreut (DE)
(72) Erfinder: Bielski, Steffen, 84518 Garching (DE); Strasser, Erich, 83308 Trostberg (DE); Kreuzer, Stephan, 83362 Surberg-Ettendorf (DE); Kobler, Alexander, 84508 Burgkirchen (DE); Perusin, Darko, 83301 Traunreut (DE); Mayer, Elmar, 83365 Nußdorf (DE)

(56) Entgegenhaltungen:
- EP-A1- 1 102 039
- EP-A1- 1 489 388
- EP-A2- 1 217 333
- EP-A2- 2 144 041
- WO-A1-2007/083118
- US-A1- 2009 072 130

## Beschreibung

Die Erfindung betrifft eine Vorrichtung zur Winkelmessung nach Anspruch 1, sowie ein Verfahren zur Winkelmessung nach Anspruch 9. Eine erfindungsgemäße Vorrichtung, bzw. ein Verfahren zur Winkelmessung kann insbesondere die Genauigkeit bei der Messung der Winkelposition von Wellen mit großen Durchmessern, sowie bei Rundtischen und bei Teleskopanwendungen entscheidend verbessern.

Hochgenaue Winkelmessgeräte zur Messung der Winkelposition einer Welle, z.B. eines Rundtisches, sind bekannt. Varianten mit messsystemseitiger Welle und Eigenlagerung sind beispielsweise im Buch "Digitale Längen- und Winkelmesstechnik", A. Ernst, Verlag Moderne Industrie, 3. Auflage 1998, S. 61-64 beschrieben. Um eine hohe Genauigkeit zu erreichen, müssen zum einen im Messsystem sehr genaue und damit sehr teure Präzisionslager eingesetzt werden, zum anderen muss ein hoher Aufwand betrieben werden, um die Welle des Messsystems, die eine Teilscheibe mit radialer Messteilung trägt, mit der zu messenden Welle mittels einer geeigneten Kupplung zu verbinden.

Weiter sind aus obigem Buch, S. 64-70, Winkelmessgeräte ohne Eigenlagerung bekannt, bei denen eine rotationssymmetrische Messteilung bzw. eine entsprechende Teilscheibe unmittelbar auf einer zu messenden Welle angeordnet wird. Entsprechende Abtasteinheiten zum Abtasten der Messteilung sind stationär zu der sich drehenden Teilscheibe angeordnet.

Als Messteilung kommen bei diesen Winkelmessgeräten Inkrementalteilungen mit bis zu 36000 radialen Strichen zum Einsatz, wobei die Winkelauflösung durch Interpolation weiter erhöht wird.

Im Idealfall wäre nun die Genauigkeit der Winkelmessung bei derartigen Winkelmessgeräten lediglich von der Präzision, mit der die Messteilung auf die Teilscheibe aufgebracht wurde, und vom Messfehler der Abtasteinheit abhängig. In der Realität weist die Drehbewegung der Teilscheibe und somit der Messteilung bedingt durch Fertigungstoleranzen jedoch immer einen Exzentrizitäts- sowie einen Taumelfehler auf. Das liegt zum einen daran, dass der Mittelpunkt der Teilscheibe nie exakt auf der Rotationsachse der zu messenden Welle liegen kann und zum anderen, dass die Rotationsachsen der Teilscheibe und der zu messenden Welle nie exakt fluchtend angeordnet sein können. Als Folge davon variieren Abstand und Lage der Messteilung bezogen auf die Abtasteinheit innerhalb einer Umdrehung der zu messenden Welle, wodurch ein Messfehler bei der Winkelmessung entsteht.

Um insbesondere bei großen Winkelmessgeräten für Wellen mit großen Durchmessern, Rundtische oder Teleskopanwendungen den hohen Aufwand für Präzisionslager und -kupplungen, sowie für die mechanische Justage zu reduzieren, schlägt die DE 199 07 326 A1 der Anmelderin vor, die Messteilung an mehreren Abtaststellen über den Umfang der Teilscheibe verteilt abzutasten und die daraus resultierenden sinusförmigen Signale auszuwerten und Exzentrizitäts- bzw. Taumelfehler zu korrigieren.

Moderne Winkelmessgeräte verwenden anstatt der Inkrementalspur jedoch bevorzugt eine absolut codierte Codespur. Diese Codespur ist beispielsweise ein mehrspuriger Code, z.B. ein Gray-Code, oder ein einspuriger Kettencode, ein sog. "Pseudo Random Code" (PRC). Dies hat den Vorteil, dass zu jedem Zeitpunkt durch Abtasten der Codespur direkt die absolute Winkelposition bestimmt werden kann. Die in der DE 199 07 326 A1 vorgeschlagene Signalverarbeitung kann für absolut codierte Codespuren jedoch nicht verwendet werden.

Es ist daher Aufgabe der Erfindung, ein absolutes Winkelmessgerät mit verbesserter Genauigkeit anzugeben.

Diese Aufgabe wird gelöst durch eine Vorrichtung nach Anspruch 1. Vorteilhafte Details dieser Vorrichtung ergeben sich aus den von Anspruch 1 abhängigen Ansprüchen.

Es wird nun eine Vorrichtung zur Winkelmessung in Form eines Winkelmessgeräts vorgeschlagen, umfassend
- einen Teilungsträger, der eine konzentrisch zu seinem Mittelpunkt angeordnete Codespur aufweist,
- wenigstens zwei Abtasteinheiten zur Ermittlung von Winkelwerten des Teilungsträgers durch Abtasten der Codespur,
- eine Kontrolleinheit, mit einer Geräteschnittstelle zur Kommunikation mit einer Folgeelektronik und wenigstens einer Schnittstelle zur Kommunikation mit Schnittstellen der Abtasteinheiten,
wobei die Kontrolleinheit eine Verarbeitungseinheit umfasst, von der über die wenigstens eine Schnittstelle Winkelwerte der Abtasteinheiten anforderbar und zu einem korrigierten Winkelwert verarbeitbar sind und der korrigierte Winkelwert über die Geräteschnittstelle zur Folgeelektronik übertragbar ist

Weiter ist es Aufgabe der Erfindung, ein Verfahren anzugeben, mit dem die Genauigkeit eines derartigen absoluten Winkelmessgeräts verbessert werden kann.

Diese Aufgabe wird gelöst durch ein Verfahren nach Anspruch 9. Vorteilhafte Details des Verfahrens ergeben sich aus den von Anspruch 9 abhängigen Ansprüchen.

Es wird nun ein Verfahren zur Winkelmessung mit einem Winkelmessgerät nach Anspruch 1 vorgeschlagen, das folgende Schritte aufweist:
- Anforderung von Winkelwerten der wenigstens zwei Abtasteinheiten,
- Verarbeitung der Winkelwerte zu einem korrigierten Winkelwert und
- Übertragung des korrigierten Winkelwerts zur Folgeelektronik.

Weitere Vorteile sowie Einzelheiten der vorliegenden Erfindung ergeben sich aus der nachfolgenden Beschreibung anhand der Figuren. Dabei zeigt
- Figur 1: ein Blockdiagramm eines ersten Ausführungsbeispiels eines erfindungsgemäßen Winkelmessgeräts,
- Figur 2: ein Blockdiagramm einer ersten Ausführungsform einer Kontrolleinheit eines erfindungsgemäßen Winkelmessgeräts,
- Figur 3: ein Blockdiagramm einer zweiten Ausführungsform einer Kontrolleinheit eines erfindungsgemäßen Winkelmessgeräts,
- Figur 4: ein Blockdiagramm einer dritten Ausführungsform einer Kontrolleinheit eines erfindungsgemäßen Winkelmessgeräts und
- Figur 5: ein Blockdiagramm eines weiteren Ausführungsbeispiels eines erfindungsgemäßen Winkelmessgeräts.

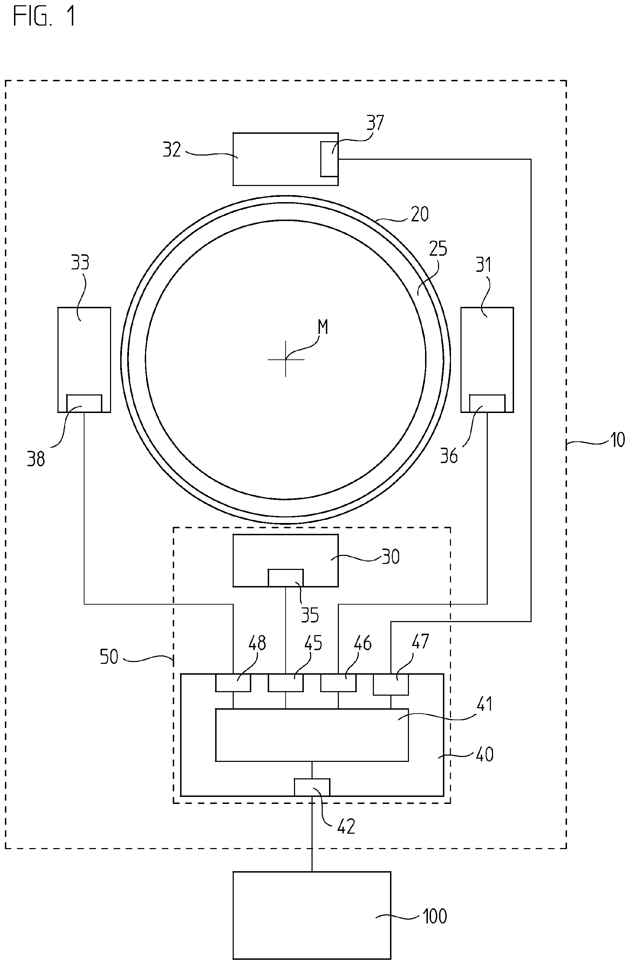

Figur 1 zeigt ein Blockdiagramm eines ersten Ausführungsbeispiels eines erfindungsgemäßen Winkelmessgeräts 10. Es umfasst als Teilungsträger eine kreis- oder ringförmige Codescheibe 20 mit einer radial um den Mittelpunkt M der Codescheibe 20 angeordneten Codespur 25, vier Abtasteinheiten 30, 31, 32, 33, sowie eine Kontrolleinheit 40.

Für den Betrieb des Winkelmessgeräts 10 wird die Codescheibe 20 drehfest mit einer zu messenden Welle verbunden, so dass sie sich um ihren Mittelpunkt M zusammen mit der Rotationsachse der zu messenden Welle dreht. Die Codescheibe 20 trägt eine lichtelektrisch, magnetisch, kapazitiv oder induktiv abtastbare Codespur 25. Erfindungsgemäß umfasst die Codespur 25 eine absolut codierte Teilung, beispielsweise in Form eines mehrspurigen Codes (z.B. Gray-Code), oder eines einspurigen Kettencodes (Pseudo Random Code, PRC). Zur Erhöhung der Auflösung des Winkelmessgeräts 10 kann zusätzlich parallel zur absolut codierten Teilung eine weitere Spur mit einer Inkrementalteilung (nicht dargestellt) angeordnet sein.

Wie einleitend beschrieben treten durch unvermeidbare Toleranzen bei der mechanischen Verbindung der zu vermessenden Welle mit der Codescheibe 20 Exzentrizitäts- und Taumelfehler auf. Das gilt sowohl für Winkelmessgeräte 10 ohne Eigenlagerung, bei denen die Codescheibe 20 direkt auf der zu vermessenden Welle angeordnet ist, als auch für eigengelagerte Winkelmessgeräte 10, die selbst eine Welle umfassen, an der die Codescheibe 20 drehfest befestigt ist und die wiederum mit der zu messenden Welle über eine Wellenkupplung verbunden ist.

Die Abtasteinheiten 30, 31, 32, 33 sind geeignet ausgestaltet, um die Codespur 25 abzutasten und aus den Abtastsignalen absolute Winkelwerte der Codescheibe 20 und somit der zu messenden Welle zu ermitteln. Das physikalische Abtastprinzip ist dabei für die vorliegende Erfindung nicht von Bedeutung. Im vorliegenden Beispiel sind die Abtasteinheiten 30, 31, 32, 33 in definierten Winkelabständen über den Umfang der Codescheibe 20 verteilt ortsfest angeordnet, beispielsweise beträgt der Winkelabstand zwischen den Abtasteinheiten 30, 31, 32, 33 je 90°. Der Offset, der sich hieraus bei der Ermittlung der absoluten Winkelwerte der Abtasteinheiten 30, 31, 32, 33 ergibt, kann entweder bereits in den Abtasteinheiten 30, 31, 32, 33, oder auch erst in der Kontrolleinheit 40 bei der Ermittlung des korrigierten Winkelwerts berücksichtigt werden.

Obwohl beim Ausführungsbeispiel in Figur 1 vier Abtasteinheiten 30-33 zum Einsatz kommen, ist die vorliegende Erfindung nicht auf diese Anzahl festgelegt. Wichtig ist, dass zur Ermittlung des korrigierten Winkelwerts wenigstens zwei Abtasteinheiten vorhanden sind.

Zur Ausgabe der absoluten Winkelwerte weisen die Abtasteinheiten 30, 31, 32, 33 digitale Schnittstellen 35, 36, 37, 38 auf. Es können sowohl parallele Schnittstellen mit bevorzugten Datenbreiten von 4 Bit (ein Nibble), 8 Bit (ein Byte) oder 16 Bit (ein Wort), als auch serielle Schnittstellen zum Einsatz kommen. Besonders geeignete serielle Schnittstellen sind hierbei bekannte Standardschnittstellen für Positionsmessgeräte wie beispielsweise EnDat oder SSI. Darüber hinaus können aber auch Feldbussysteme (z.B. CAN-Bus, Interbus-S, SERCOS) oder Schnittstellen, die unter dem Oberbegriff "Echtzeit-Ethernet" zusammengefasst werden können, als Schnittstellen 35-38 zum Einsatz kommen. Dementsprechend kann es sich bei den Schnittstellenverbindungen, wie in Figur 1 dargestellt, um Punkt-zu-Punkt-Verbindungen handeln, es können aber auch Busverbindungen mit Linien- oder Ringstruktur vorliegen.

Für die Kommunikation zwischen der Kontrolleinheit 40 und den Abtasteinheiten 30-33 sind in der Kontrolleinheit 40 Schnittstellen 45-48 vorgesehen, die über entsprechende Signalleitungen mit den Schnittstellen 35-38 der Abtasteinheiten 30-33 verbunden sind. Bei den Signalleitungen kann es sich um herkömmliche elektrische Leitungen handeln, bei großen räumlichen Abständen zwischen der Kontrolleinheit 40 und den Abtasteinheiten 30-33 kann es jedoch vorteilhaft sein, als Signalleitungen Lichtwellenleiter und als Schnittstellen 45-48 der Kontrolleinheit 40, bzw. Schnittstellen 35-38 der Abtasteinheiten 30-33 optische Schnittstellen einzusetzen. Über die geräteinternen Schnittstellenverbindungen sind nun die absoluten Winkelwerte, die in den Abtasteinheiten 30-33 ermittelt werden, zur Kontrolleinheit 40 übertragbar.

Die Kontrolleinheit 40 umfasst weiter zur Kommunikation mit einer Folgeelektronik 100 eine Geräteschnittstelle 42. Diese ist mit Vorteil ebenfalls eine serielle Datenübertragungsschnittstelle, prominente Beispiele hierfür sind wiederum EnDat, SSI oder Echtzeit-Ethernet-Schnittstellen.

Weiter ist in der Kontrolleinheit 40 eine Verarbeitungseinheit 41 vorgesehen. Diese dient zur Anforderung von Winkelwerten von den Abtasteinheiten 30-33 über die entsprechenden Schnittstellenverbindungen, zur Bildung eines korrigierten Winkelwerts unter Verwendung der angeforderten Winkelwerte, sowie zur Übertragung des korrigierten Winkelwerts über die Geräteschnittstelle 42 zur Folgeelektronik 100.

Darüber hinaus kann die Verarbeitungseinheit 41 die von den Abtasteinheiten 30-33 eintreffenden Winkelwerte auf Plausibilität überprüfen und bei Abweichungen, die eine festgelegte Toleranzschwelle überschreiten, über die Geräteschnittstelle 42 eine Warn- bzw. Fehlermeldung an die Folgeelektronik 100 senden.

Für sicherheitsrelevante Anwendungen ist es vorteilhaft, die Verarbeitungseinheit 41 so auszugestalten, dass wenigstens zwei korrigierte Winkelwerte erzeugbar und zur Folgeelektronik 100 übertragbar sind, die auf den Winkelwerten verschiedener Abtasteinheiten 30-33 basieren. Auf diese Weise können durch Vergleich in der Folgeelektronik 100 Fehler bei der Erzeugung oder der Übertragung der korrigierten Winkelwerte zuverlässig aufgedeckt werden.

Insbesondere bei sehr großen Winkelmessgeräten 10, bei denen die Codescheibe 20, die Abtasteinheiten 30-33, sowie die Kontrolleinheit 40 nicht gemeinsam in einem Gehäuse angeordnet sein können, sondern separat als Einzelkomponenten montiert werden, ist es vorteilhaft, die Kontrolleinheit 40 und eine der Abtasteinheiten 30-33 (in Figur 1 die Abtasteinheit 30) zu einer Master-Abtasteinheit 50 zusammenzufassen. Dadurch wird zum einen die Montage des Winkelmessgeräts 10 erleichtert, zum anderen kann die Schnittstellenverbindung der entsprechenden Schnittstellen 35, 45 einfacher ausgeführt werden.

Der besondere Vorteil eines erfindungsgemäßen Winkelmessgeräts 10 ist es, dass aus der Sicht der Folgeelektronik 100 bezüglich der Kommunikation mit der Geräteschnittstelle 42 kein Unterschied zur Kommunikation mit einem Winkelmessgerät, wie es aus dem Stand der Technik bekannt ist, erkennbar ist, trotzdem aber eine wesentlich verbesserte Messgenauigkeit erreicht wird. Somit können auch bestehende Anlagen mit einem erfindungsgemäßen Winkelmessgerät 10 nachgerüstet und in ihrer Genauigkeit verbessert werden, ohne dass in die Folgeelektronik 100 eingegriffen werden muss.

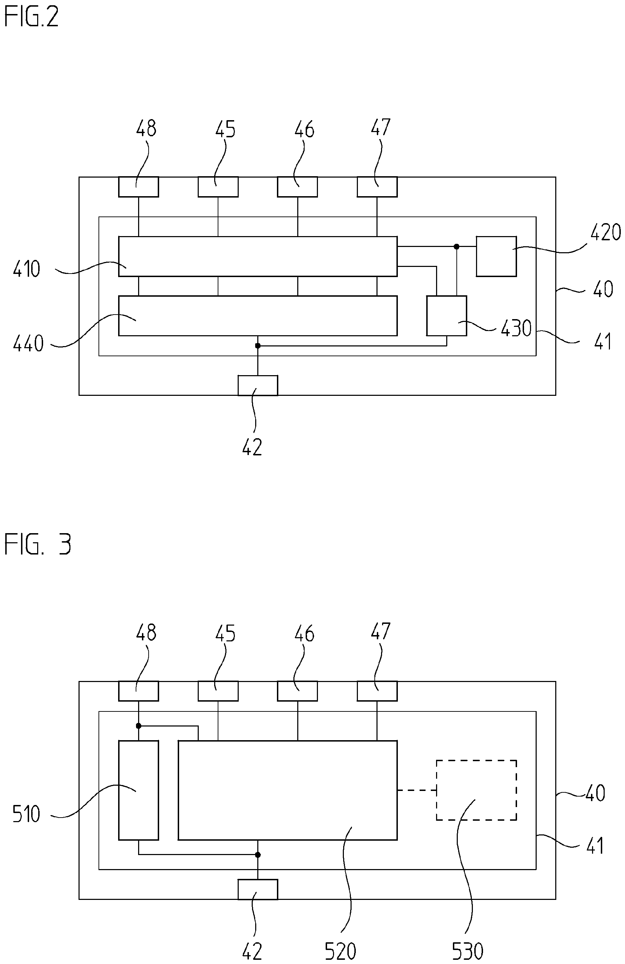

Figur 2 zeigt ein Blockdiagramm einer Kontrolleinheit 40 einer ersten Ausführungsform eines erfindungsgemäßen Winkelmessgeräts 10. Funktionsblöcke, die in Verbindung mit Figur 1 bereits beschrieben wurden, tragen die gleichen Bezugszeichen.

Zur Ermittlung des korrigierten Winkelwerts umfasst die Verarbeitungseinheit 41 eine Extrapolationseinheit 410, einen Taktgenerator 420, eine Zeitmesseinheit 430, sowie eine Korrektureinheit 440.

Die Extrapolationseinheit 410 fordert in Zeitabständen, die vom Taktsignal des Taktgenerators 420 bestimmt sind, aktuelle Winkelwerte über die Schnittstellen 45-48 von den Abtasteinheiten 30-33 an. Trifft nun über die Geräteschnittstelle 42 ein Positionsanforderungsbefehl von der Folgeelektronik 100 ein, so ermittelt die Extrapolationseinheit 410 aus den wenigstens zwei aktuellsten Winkelwerten je Abtasteinheit 30-33 extrapolierte Winkelwerte. Die für die Extrapolation benötigte Zeit zwischen der Anforderung des letzten Winkelwerts je Abtasteinheit 30-33 und dem Zeitpunkt des Eintreffens des Positionsanforderungsbefehls misst die Zeitmesseinheit 430. Die extrapolierten Winkelwerte sind der Korrektureinheit 440 zugeführt, die diese zum korrigierten Winkelwert, beispielsweise durch Bildung des Mittelwerts aus den extrapolierten Winkelwerten, verarbeitet. Dieser wird über die Geräteschnittstelle 42 an die Folgeelektronik 100 ausgegeben.

Figur 3 zeigt ein Blockdiagramm einer Kontrolleinheit 40 einer weiteren Ausführungsform eines erfindungsgemäßen Winkelmessgeräts 10. Auch hier tragen Funktionsblöcke, die in Verbindung mit Figur 1 bereits beschrieben wurden, die gleichen Bezugszeichen.

Die Verarbeitungseinheit 41 umfasst in diesem Ausführungsbeispiel eine Korrektureinheit 510 und eine Korrekturwert-Ermittlungseinheit 520. Optional kann die Verarbeitungseinheit 41 noch einen Taktgenerator 530 enthalten.

Trifft hier ein Positionsanforderungsbefehl von der Folgeelektronik 100 ein, so fordert die Korrekturwert-Ermittlungseinheit 520 über die Schnittstellen 45-48 aktuelle Winkelwerte von den Abtasteinheiten 30-33 an und ermittelt einen Korrekturwert, der geeignet ist, den aktuell von einer führenden Abtasteinheit 33 eintreffenden Winkelwert zu korrigieren. Die Korrekturwert-Ermittlungseinheit 520 ist hierzu mit Vorteil so ausgestaltet, dass die Anforderung aktueller Winkelwerte mit möglichst geringer Zeitverzögerung und zeitgleich für alle Abtasteinheiten 30-33 erfolgt. Der ermittelte Korrekturwert ist der Korrektureinheit 510 zugeführt, die den aktuell von der führenden Abtasteinheit 33 eintreffenden Winkelwert korrigiert und über die Geräteschnittstelle 42 an die Folgeelektronik 100 ausgibt.

Bezüglich der Reaktionszeit des Winkelmessgeräts 10, d.h. der Zeit zwischen dem Eintreffen des Positionsanforderungsbefehls und der Ausgabe des aktuellen korrigierten Winkelwerts, hat es sich als vorteilhaft herausgestellt, wenn als Korrekturwert, der an die Korrektureinheit 510 zur Ermittlung des korrigierten Winkelwerts weitergeleitet wird, nicht der aus den aktuell eintreffenden Winkelwerten ermittelte Korrekturwert, sondern der bei Eintreffen des vorhergehenden Positionsanforderungsbefehl ermittelte Korrekturwert verwendet wird. Das ist deshalb möglich, weil es sich bei den Exzentrizitäts- bzw. Taumelfehlern um langperiodische Fehler handelt, d.h. sich der Korrekturwert bei kleinen Winkeländerungen nur unwesentlich ändert. Darüber hinaus werden Winkelmessgeräte 10 im Betrieb von der Folgeelektronik 100 üblicherweise zyklisch in kurzen Zeitabständen, also mit hoher Abfragefrequenz, abgefragt. Auf diese Weise kann, insbesondere bei langsamen Drehzahlen der zu messenden Welle, bzw. bei einer hohen Abfragefrequenz der Folgeelektronik 100, ohne merkliche Verringerung der Messgenauigkeit eine verbesserte Reaktionszeit erreicht werden, da der Korrekturwert zum Zeitpunkt des Eintreffens des Positionsanforderungsbefehls bereits zur Verfügung steht.

In weiterer Verbesserung hierzu kann die Anforderung von aktuellen Winkelwerten von den Abtasteinheiten 30-33 und die Ermittlung von Korrekturwerten in der Korrekturwert-Ermittlungseinheit 520 vom optionalen Taktgenerator 530 gesteuert werden. Dadurch wird gewährleistet, dass kontinuierlich neue Korrekturwerte ermittelt werden und daher bei Eintreffen eines Positionsanforderungsbefehls stets bereits sehr aktuelle Korrekturwerte zur Verfügung stehen.

Um zu vermeiden, dass sich bei der führenden Abtasteinheit 33 interne, vom Taktgenerator 530 gesteuerte und externe, über die Geräteschnittstelle 42 eintreffende Anforderungen von aktuellen Winkelwerten zeitlich überschneiden, kann die führende Abtasteinheit 33 von der Ermittlung neuer Korrekturwerte ausgenommen werden. Neue Korrekturwerte werden in diesem Fall lediglich unter Verwendung von Winkelwerten der verbleibenden Abtasteinheiten 30-32 ermittelt.

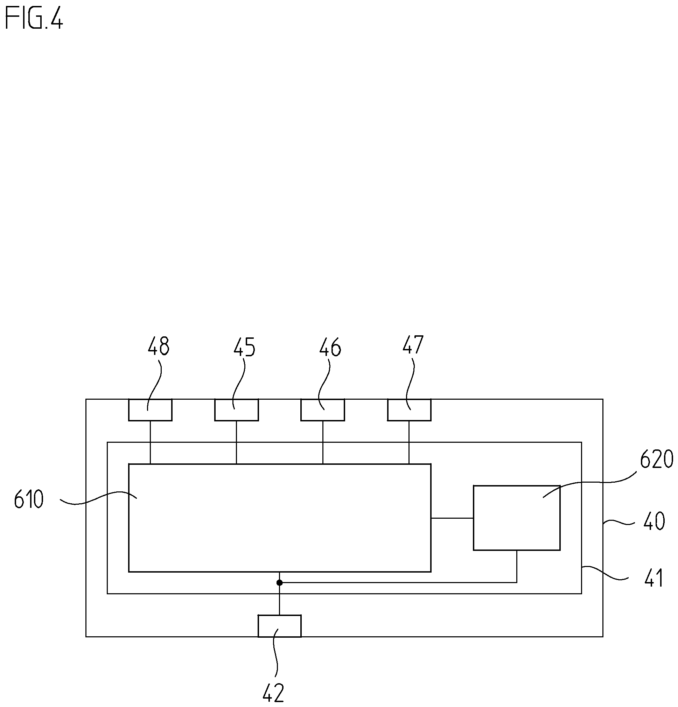

Figur 4 zeigt ein Blockdiagramm einer Kontrolleinheit 40 einer weiteren Ausführungsform eines erfindungsgemäßen Winkelmessgeräts 10. Auch hier tragen in Verbindung mit Figur 1 bereits beschriebene Funktionsblöcke das gleiche Bezugszeichen.

Diese Ausführungsform basiert auf der Erkenntnis, dass bei einem zyklischen Betrieb des Winkelmessgeräts 10 der zeitliche Abstand des Eintreffens von Positionsanforderungsbefehlen von der Folgeelektronik 100 über die Geräteschnittstelle 42 bekannt ist. Neben einer Korrektureinheit 610 ist nun eine Triggereinheit 620 vorgesehen, die die Anforderung neuer Winkelwerte von den Abtasteinheiten 30-33, sowie die Ermittlung von korrigierten Winkelwerten steuert. Die Triggereinheit 620 sendet hierzu Triggersignale an die Korrektureinheit. Das Timing der Triggersignale ist so bemessen, dass sie eine vorgegebene Zeit nach dem letzten Eintreffen eines Positionsanforderungsbefehls von der Folgeelektronik 100, aber bereits vor dem Eintreffen eines aktuellen Positionsanforderungsbefehls generiert werden. Das hat zur Folge, dass bei zyklischem Betrieb auf einen Positionsanforderungsbefehl sofort ein aktueller korrigierter Winkelwert zur Folgeelektronik gesendet werden kann. Die Information, wann die Triggereinheit 620 ein Triggersignal an die Korrektureinheit 610 senden muss, kann der Triggereinheit 620 beispielsweise über die Geräteschnittstelle 42 mitgeteilt werden.

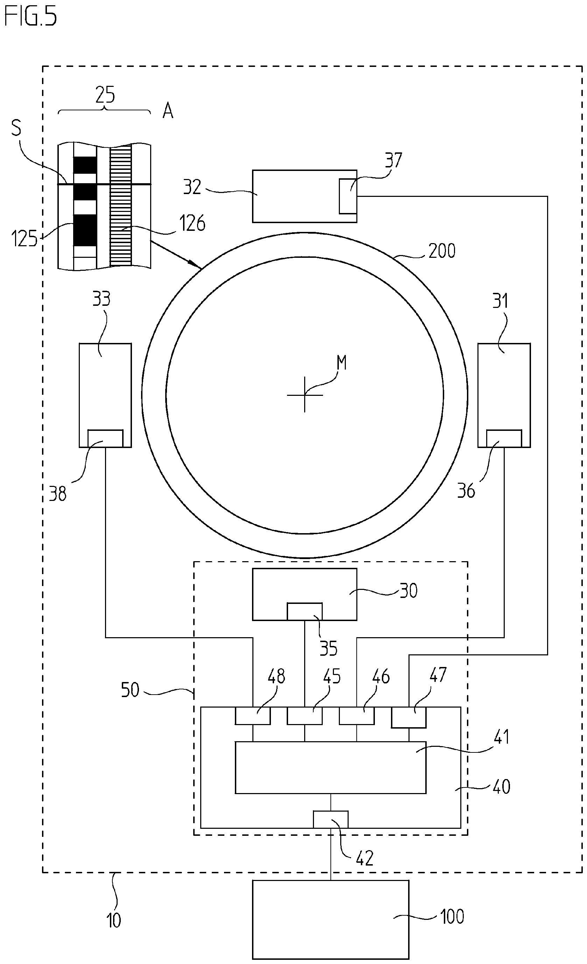

Figur 5 zeigt ein Blockdiagramm eines weiteren Ausführungsbeispiels eines erfindungsgemäßen Winkelmessgeräts 10. Abweichend zum Ausführungsbeispiel in Figur 1 umfasst das Winkelmessgerät 10 als Teilungsträger einen Ring 200, auf dessen zylindrischer Außenfläche eine Codespur 25 angeordnet ist. In diesem Ausführungsbeispiel umfasst die Codespur 25 eine absolut codierte Teilung 125 sowie eine Inkrementalteilung 126. Der Ring 200 ist beispielsweise aus Stahl gefertigt und wird in Fachkreisen auch als "Trommel" bezeichnet. Mit Vorteil sind die Strichlängen der Teilungsspuren 125, 126 quer zur Messrichtung dabei so ausgeführt, dass sie größer sind als die von den Abtasteinheiten 30-33 benötigte Abtastlänge, so dass axiale Verschiebungen des Rings 200 gegenüber den Abtasteinheiten 30-33 keine Messwertverfälschungen hervorrufen.

Besonders bei großen Außendurchmessern des Rings 200 werden die absolut codierte Teilung 125 und die Inkrementalteilung 126 nicht direkt auf den Ring 200 aufgebracht, sondern in Form eines Stahlbandes, das die Teilungsspuren 125, 126 trägt und in eine im Außendurchmesser des Rings befindliche Nut eingelegt und mit einem Spannschloss gespannt wird. Prinzip bedingt entsteht dabei, wie in Ausschnitt A von Figur 5 dargestellt, eine Stoßstelle S. Beim Überfahren der Stoßstelle S mit einer Abtasteinheit 30-33 kann sich ein Sprung im abgelesenen Winkelwert ergeben. Um dessen Auswirkung auf die Bildung des korrigierten Winkelwerts zu minimieren, ist es vorteilhaft, wenn die Verarbeitungseinheit 41 Winkelwerte von Abtasteinheiten 30-33, die sich im Bereich der Stoßstelle S befinden, ausblendet und nicht zur Ermittlung des korrigierten Winkelwerts verwendet.

Es sei noch darauf hingewiesen, dass es bei der Realisierung der Kontrolleinheit 40, insbesondere bei den Ausführungsbeispielen, die anhand der Figuren 2-4 beschrieben sind, nicht zwingend notwendig ist, zur Ermittlung der Korrekturwerte die Winkelwerte aller Abtasteinheiten 30-33 vollständig zur Kontrolleinheit 40 zu übertragen. Abweichungen der Winkelwerte, die durch Taumel- und/oder Exzentrizitätsfehler verursacht sind, bewegen sich in einem relativ kleinen Wertebereich. Es ist daher meist ausreichend, lediglich den aktuellen Winkelwert einer führenden Abtasteinheit 30-33 vollständig zu übertragen und zu dessen Korrektur so viele der niederwertigen Bits der verbleibenden Abtasteinheiten 30-33 zu übertragen, dass ein maximaler Fehler zuverlässig korrigiert werden kann.

Generell ist es vorteilhaft, wenn die Kontrolleinheit 40 so ausgestaltet ist, dass die Abtasteinheiten 30-33 von der Folgeelektronik 100 über die Geräteschnittstelle 42 auch einzeln ansprechbar sind. Hierzu können beispielsweise spezielle Schnittstellenbefehle vorgesehen sein, die die Auswahl, das Beschreiben oder das Auslesen einzelner Abtasteinheiten 30-33 ermöglichen. Es sind aber grundsätzlich auch andere Auswahl- bzw. Umschaltmechanismen möglich.

Weiter ist es vorteilhaft, die Kontrolleinheit 40 so auszuführen, dass einzelne Abtasteinheiten 30-33 deaktivierbar sind, bzw. deren Winkelwerte nicht für die Ermittlung des korrigierten Winkelwerts berücksichtigt werden. In diesem Fall kann das Winkelmessgerät 10 mit verminderter Genauigkeit auch dann noch weiter betrieben werden, wenn eine Abtasteinheit 30-33 ausfällt, bzw. fehlerhafte Werte liefert. Insbesondere in Verbindung mit dem in Figur 3 beschriebenen Ausführungsbeispiel einer Kontrolleinheit 40 ist es von Vorteil, die führende Abtasteinheit 33 wählbar auszuführen.

Die vorliegende Erfindung ist selbstverständlich nicht auf die beschriebenen Ausführungsbeispiele beschränkt, es existieren vielmehr im Rahmen der erfindungsgemäßen Überlegungen weitere Ausführungsformen, die dem Fachmann geläufig sind.

## Patentansprüche

1. Vorrichtung zur Winkelmessung in Form eines Winkelmessgeräts (10), umfassend
• einen Teilungsträger (20, 200), der eine konzentrisch zu seinem Mittelpunkt angeordnete Codespur (25) aufweist, die eine absolut codierte Teilung umfasst,
• wenigstens zwei Abtasteinheiten (30-33) zur Ermittlung und Bereitstellung von absoluten Winkelwerten des Teilungsträgers (20, 200) durch Abtasten der Codespur (25),
• eine Kontrolleinheit (40), mit einer Geräteschnittstelle (42) zur Kommunikation mit einer Folgeelektronik (100) und wenigstens einer Schnittstelle (45-48) zur Kommunikation mit Schnittstellen (35-38) der Abtasteinheiten (30-33),
wobei die Kontrolleinheit (40) eine Verarbeitungseinheit (41) umfasst, die dazu ausgestaltet ist, von der wenigstens einen Schnittstelle (45-48) absolute Winkelwerte der Abtasteinheiten (30-33) anzufordern und zu einem korrigierten absoluten Winkelwert zu verarbeiten und den korrigierten absoluten Winkelwert über die Geräteschnittstelle (42) zur Folgeelektronik (100) zu übertragen.

2. Vorrichtung nach Anspruch 1, wobei die Anforderung von absoluten Winkelwerten durch Positionsanforderungsbefehle, die von der Folgeelektronik (100) bei der Geräteschnittstelle eintreffen (42), initiierbar ist.

3. Vorrichtung nach Anspruch 1, wobei die Verarbeitungseinheit (41) weiter einen Taktgenerator (420, 530) umfasst und die Anforderung von absoluten Winkelwerten vom Taktgenerator (420, 530) steuerbar ist.

4. Vorrichtung nach Anspruch 3, wobei die Verarbeitungseinheit (41) weiter umfasst:
• eine Zeitmesseinheit (430), mit der die Zeit zwischen der letzten Anforderung von absoluten Winkelwerten bis zum Eintreffen eines Positionsanforderungsbefehls bei der Geräteschnittstelle (42) messbar ist,
• eine Extrapolationseinheit (410), mit der nach dem Eintreffen eines Positionsanforderungsbefehls extrapolierte absolute Winkelwerte berechenbar sind und
• eine Korrektureinheit (440), die die extrapolierten absoluten Winkelwerte zum korrigierten absoluten Winkelwert verarbeitet.

5. Vorrichtung nach einem der Ansprüche 2 oder 3, wobei die Verarbeitungseinheit (41) weiter umfasst:
• eine Korrekturwert-Ermittlungseinheit (520) zur Ermittlung eines Korrekturwerts aus absoluten Winkelwerten und
• eine Korrektureinheit (440), mit der aus dem aktuellen absoluten Winkelwert einer führenden Abtasteinheit (30) und dem Korrekturwert der korrigierte absolute Winkelwert berechenbar ist.

6. Vorrichtung nach Anspruch 1, wobei die Verarbeitungseinheit (41) weiter eine Triggereinheit (620) und eine Korrektureinheit (610) umfasst, wobei die Triggereinheit (620) ausgestaltet ist, bereits vor dem Eintreffen eines Positionsanforderungsbefehls ein Triggersignal zur Korrektureinheit (610) zu senden und von der Korrektureinheit (610) nach dem Eintreffen des Triggersignals aktuelle absolute Winkelwerte anforderbar sind und ein korrigierter absoluten Winkelwert generierbar ist.

7. Vorrichtung nach einem der vorhergehenden Ansprüche, wobei eine der Abtasteinheiten (30-33) und die Kontrolleinheit (40) zu einer Master-Abtasteinheit (50) zusammengefasst sind.

8. Vorrichtung nach einem der vorhergehenden Ansprüche, wobei die Codespur (25) eine absolut codierte Teilung (125) und eine Inkrementalteilung (126) umfasst.

9. Verfahren zur Winkelmessung mit einem Winkelmessgerät (10) nach Anspruch 1, mit folgenden Schritten:
• Anforderung von absoluten Winkelwerten der wenigstens zwei Abtasteinheiten (30-33),
• Verarbeitung der absoluten Winkelwerte zu einem korrigierten absoluten Winkelwert und
• Übertragung des korrigierten absoluten Winkelwerts zur Folgeelektronik (100).

10. Verfahren nach Anspruch 9, wobei die Anforderung der absoluten Winkelwerte durch einen Positionsanforderungsbefehl initiiert wird, der bei der Geräteschnittstelle (42) von der Folgeelektronik (100) eintrifft.

11. Verfahren nach Anspruch 9, wobei die Anforderung der absoluten Winkelwerte von einem Taktgenerator (420, 530) gesteuert wird.

12. Verfahren nach Anspruch 11, wobei
• die Zeit zwischen der letzten Anforderung von absoluten Winkelwerten bis zum Eintreffen eines Positionsanforderungsbefehls bei der Geräteschnittstelle (42) mit einer Zeitmesseinheit (430) gemessen wird,
• in einer Extrapolationseinheit (410) aus den absoluten Winkelwerten und der gemessenen Zeit extrapolierte absolute Winkelwerte berechnet werden und
• in einer Korrektureinheit (440) die extrapolierten absoluten Winkelwerte zum korrigierten absoluten Winkelwert verarbeitet werden.

13. Verfahren nach einem der Ansprüche 10 und 11, wobei
• in einer Korrekturwert-Ermittlungseinheit (520) aus absoluten Winkelwerten ein Korrekturwert zur Korrektur eines absoluten Winkelwertes einer führenden Abtasteinheit (30) zum korrigierten absoluten Winkelwert ermittelt wird und
• in einer Korrektureinheit (510) der korrigierte Winkelwert berechnet wird.

14. Verfahren nach Anspruch 13, wobei zur Ermittlung des Korrekturwerts absolute Winkelwerte verwendet werden, die bereits vor dem Eintreffen des Positionsanforderungsbefehls angefordert wurden.

15. Verfahren nach Anspruch 9, wobei die Anforderung von absoluten Winkelwerten und die Verarbeitung der absoluten Winkelwerte zum korrigierten absoluten Winkelwert in einer Korrektureinheit (610) erfolgt und von einer Triggereinheit (620) gesteuert wird, die hierzu bereits vor dem Eintreffen eines Positionsanforderungsbefehls ein Triggersignal an die Korrektureinheit (610) sendet.

## Claims

1. Apparatus for angle measurement in the form of an angle measuring device (10),
comprising
• a graduation carrier (20, 200) having a code track (25) arranged concentrically with respect to its midpoint, said code track comprising an absolutely encoded graduation,
• at least two scanning units (30-33) for determining and providing absolute angle values of the graduation carrier (20, 200) by scanning the code track (25),
• a control unit (40) with a device interface (42) for communication with a downstream electronics system (100) and at least one interface (45-48) for communication with interfaces (35-38) of the scanning units (30-33),
wherein the control unit (40) comprises a processing unit (41) configured to request absolute angle values of the scanning units (30-33) from the at least one interface (45-48) and to process them to form a corrected absolute angle value and to transmit the corrected absolute angle value via the device interface (42) to the downstream electronics system (100).

2. Apparatus according to Claim 1, wherein the request of absolute angle values can be initiated by position request commands that arrive at the device interface (42) from the downstream electronics system (100).

3. Apparatus according to Claim 1, wherein the processing unit (41) further comprises a clock generator (420, 530) and the request of absolute angle values can be controlled by the clock generator (420, 530).

4. Apparatus according to Claim 3, wherein the processing unit (41) further comprises:
• a time measuring unit (430), which can be used to measure the time between the last request of absolute angle values and the arrival of a position request command at the device interface (42),
• an extrapolation unit (410), by which, after the arrival of a position request command, extrapolated absolute angle values can be calculated, and
• a correction unit (440), which processes the extrapolated absolute angle values to form the corrected absolute angle value.

5. Apparatus according to either of Claims 2 and 3, wherein the processing unit (41) further comprises:
• a correction value determining unit (520) for determining a correction value from absolute angle values, and
• a correction unit (440), by which the corrected absolute angle value can be calculated from the current absolute angle value of a leading scanning unit (30) and the correction value.

6. Apparatus according to Claim 1, wherein the processing unit (41) further comprises a trigger unit (620) and a correction unit (610), wherein the trigger unit (620) is configured to send a trigger signal to the correction unit (610) already before the arrival of a position request command and, by means of the correction unit (610), after the arrival of the trigger signal, current absolute angle values can be requested and a corrected absolute angle value can be generated.

7. Apparatus according to any of the preceding claims, wherein one of the scanning units (30-33) and the control unit (40) are combined to form a master scanning unit (50).

8. Apparatus according to any of the preceding claims, wherein the code track (25) comprises an absolutely coded graduation (125) and an incremental graduation (126).

9. Method for angle measurement by an angle measuring device (10) according to Claim 1, comprising the following steps:
• requesting absolute angle values of the at least two scanning units (30-33),
• processing the absolute angle values to form a corrected absolute angle value, and
• transmitting the corrected absolute angle value to the downstream electronics system (100).

10. Method according to Claim 9, wherein the requesting of the absolute angle values is initiated by a position request command that arrives at the device interface (42) from the downstream electronics system (100).

11. Method according to Claim 9, wherein the requesting of the absolute angle values is controlled by a clock generator (420, 530).

12. Method according to Claim 11, wherein
• the time between the last request of absolute angle values and the arrival of a position request command at the device interface (42) is measured by a time measuring unit (430),
• in an extrapolation unit (410), extrapolated absolute angle values are calculated from the absolute angle values and the measured time, and
• in a correction unit (440), the extrapolated absolute angle values are processed to form the corrected absolute angle value.

13. Method according to either of Claims 10 and 11, wherein
• in a correction value determining unit (520), a correction value for correcting an absolute angle value of a leading scanning unit (30) to form the corrected absolute angle value is determined from absolute angle values, and
• the corrected angle value is calculated in a correction unit (510).

14. Method according to Claim 13, wherein absolute angle values that had already been requested before the arrival of the position request command are used for determining the correction value.

15. Method according to Claim 9, wherein requesting absolute angle values and processing the absolute angle values to form the corrected absolute angle value are carried out in a correction unit (610) and are controlled by a trigger unit (620), which for this purpose sends a trigger signal to the correction unit (610) already before the arrival of a position request command.

## Revendications

1. Dispositif de mesure angulaire sous la forme d'un appareil de mesure angulaire (10), comprenant
* un support de graduation (20, 200), lequel possède une piste codée (25) disposée de manière concentrique par rapport à son centre et qui comporte une graduation au codage absolu,
* au moins deux unités de palpage (30-33) destiné à déterminer et à délivrer des valeurs d'angle absolues du support de graduation (20, 200) par palpage de la piste codée (25),
* une unité de contrôle (40), dotée d'une interface d'appareil (42) destinée à la communication avec une électronique en aval (100) et d'au moins une interface (45-48) destinée à la communication avec les interfaces (35-38) des unités de palpage (30-33),
l'unité de contrôle (40) comprenant une unité de traitement (41) qui est conçue pour demander les valeurs d'angle absolues des unités de palpage (30-33) de la part de l'au moins une interface (45-48) et les traiter afin d'obtenir une valeur d'angle absolue corrigée, puis transmettre la valeur d'angle absolue corrigée à l'électronique en aval (100) par le biais de l'interface d'appareil (42).

2. Dispositif selon la revendication 1, la demande de valeurs d'angle absolues pouvant être initiée par des instructions de demande de position qui arrivent depuis l'électronique en aval (100) sur l'interface d'appareil (42).

3. Dispositif selon la revendication 1, l'unité de traitement (41) comprenant en outre un générateur d'horloge (420, 530) et la demande de valeurs d'angle absolues pouvant être commandée par le générateur d'horloge (420, 530).

4. Dispositif selon la revendication 3, l'unité de traitement (41) comprenant en outre :
* une unité de mesure du temps (430) avec laquelle peut être mesuré le temps entre la dernière demande de valeurs d'angle absolues et l'arrivée d'une instruction de demande de position sur l'interface d'appareil (42),
* une unité d'extrapolation (410) avec laquelle des valeurs d'angle absolues extrapolées peuvent être calculées après l'arrivée d'une instruction de demande de position et
* une unité de correction (440) qui traite les valeurs d'angle absolues extrapolées afin d'obtenir une valeur d'angle absolue corrigée.

5. Dispositif selon l'une des revendications 2 ou 3, l'unité de traitement (41) comprenant en outre :
* une unité de détermination de valeur de correction (520) destinée à déterminer une valeur de correction à partir des valeurs d'angle absolues et
* une unité de correction (440) avec laquelle peut être calculée la valeur d'angle absolue corrigée à partir de la valeur d'angle absolue actuelle d'une unité de palpage (30) dominante et la valeur de correction.

6. Dispositif selon la revendication 1, l'unité de traitement (41) comprenant en outre une unité de déclenchement (620) et une unité de correction (610), l'unité de déclenchement (620) étant conçue pour envoyer un signal de déclenchement à l'unité de correction (610) déjà avant l'arrivée d'une instruction de demande de position et des valeurs d'angle absolues actuelles peuvent être demandées et une valeur d'angle absolue corrigée peut être générée par l'unité de correction (610) après l'arrivée du signal de déclenchement.

7. Dispositif selon l'une des revendications précédentes, l'une des unités de palpage (30-33) et l'unité de contrôle (40) étant regroupées en une unité de palpage maître (50).

8. Dispositif selon l'une des revendications précédentes, la piste codée (25) comprenant une graduation à codage absolu (125) et une graduation incrémentale (126).

9. Procédé de mesure angulaire avec un appareil de mesure angulaire (10) selon la revendication 1, comprenant les étapes suivantes :
* demande de valeurs d'angle absolues des au moins deux unités de palpage (30-33),
* traitement des valeurs d'angle absolues afin d'obtenir une valeur d'angle absolue corrigée et
* transmission de la valeur d'angle absolue corrigée à l'électronique en aval (100).

10. Procédé selon la revendication 9, la demande des valeurs d'angle absolues étant initiée par une instruction de demande de position qui arrive depuis l'électronique en aval (100) sur l'interface d'appareil (42).

11. Procédé selon la revendication 9, la demande des valeurs d'angle absolues étant commandée par un générateur d'horloge (420, 530).

12. Procédé selon la revendication 11,
* le temps entre la dernière demande de valeurs d'angle absolues et l'arrivée d'une instruction de demande de position sur l'interface d'appareil (42) étant mesuré avec une unité de mesure du temps (430),
* des valeurs d'angle absolues extrapolées sont calculées dans une unité d'extrapolation (410) à partir des valeurs d'angle absolues et du temps mesuré et
* les valeurs d'angle absolues extrapolées sont traitées dans une unité de correction (440) afin d'obtenir une valeur d'angle absolue corrigée.

13. Procédé selon l'une des revendications 10 et 11,
* une valeur de correction est déterminée dans une unité de détermination de valeur de correction (520) à partir des valeurs d'angle absolues en vue de corriger une valeur d'angle absolue d'une unité de palpage (30) dominante pour obtenir une valeur d'angle absolue corrigée et
* la valeur d'angle absolue corrigée est calculée dans une unité de correction (440).

14. Procédé selon la revendication 13, la détermination de la valeur de correction étant effectuée en utilisant des valeurs d'angle absolues qui avaient déjà été demandées avant l'arrivée de l'instruction de demande de position.

15. Procédé selon la revendication 9, la demande de valeurs d'angle absolues et le traitement des valeurs d'angle absolues afin d'obtenir une valeur d'angle absolue corrigée s'effectuant dans une unité de correction (610) et étant commandés par une l'unité de déclenchement (620) qui envoie à cet effet un signal de déclenchement à l'unité de correction (610) déjà avant l'arrivée d'une instruction de demande de position.
